# EUROPEAN PATENT SPECIFICATION

(11) **EP 4 276 025 B1**
(45) Date of publication and mention of the grant of the patent: **02.04.2025**
(21) Application number: 23167267.6
(22) Date of filing: 11.04.2023
(51) Int. Cl.: B65B 61/24, B65B 9/20, B65B 51/26, B65B 57/08, B65B 57/16, B65B 55/08, B65B 55/02, B65B 3/00, B65B 31/02, B65B 57/18, B29C 65/00, B29C 65/02, B29K 705/02

(54) **PACKAGING MACHINE AND METHOD FOR PRODUCING PACKAGES**
VERPACKUNGSMASCHINE UND VERFAHREN ZUR HERSTELLUNG VON VERPACKUNGEN
MACHINE D'EMBALLAGE ET PROCÉDÉ DE PRODUCTION D'EMBALLAGES

(30) Priority: 14.04.2022 EP 22168364
(43) Date of publication of application: 15.11.2023
(73) Proprietor: Tetra Laval Holdings & Finance S.A., 1009 Pully (CH)
(72) Inventor: GARUTI, Nicola, 41123 Modena (IT); GASPARINI, Enrico, 41123 Modena (IT)
(74) Representative: Tetra Pak - Patent Attorneys SE

(56) References cited:
- EP-A1- 3 575 227
- EP-A1- 3 741 690
- US-A1- 2020 307 937

## Description

### TECHNICAL FIELD

The present invention relates to a packaging machine for producing packages of a pourable product, in particular a pourable food product.

The present invention also relates to a method for producing packages of a pourable product, in particular a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material from a magazine unit through a sterilization apparatus for sterilizing the web of packaging material and into an isolation housing (a closed and at least in part sterile environment) in which the sterilized web of packaging material is maintained and advanced. An example of packaging machine is disclosed in patent document EP3575227A1. During advancement of the web of packaging material through a main chamber of the isolation housing, the web of packaging material is folded and sealed longitudinally to form a tube having a longitudinal seal, which is further fed along a vertical advancing direction into and through an auxiliary chamber of the isolation housing.

In order to complete the forming operations, the tube is filled with a sterilized or sterile-processed pourable product, in particular a pourable food product, and is subsequently formed for at least partially defining the final shape of the package, transversally sealed and subsequently cut along equally spaced transversal cross sections within a package forming unit of the packaging machine during advancement along the vertical advancing direction.

Pillow packages are so obtained within the packaging machine, each pillow package having a longitudinal sealing band, a top transversal sealing band and a bottom transversal sealing band.

It is known that shortly after the sealing the longitudinal seal of the tube is still warm and, thus, is weaker than the fully cooled one. This is typically the case with the tube advancing within a downstream portion of the main chamber and an upstream portion of the auxiliary chamber. Therefore, it is required to control the overall process such to avoid or to at least limit the possibility of the longitudinal seal collapsing (i.e. to open and/or losing its integrity) during the advancement of the tube as a result of the forces acting on the tube itself.

In the unlikely case that the longitudinal seal should collapses (i.e. the tube opens and/or loses its integrity), it is necessary to stop producing and reestablish production under aseptic conditions. The need is felt to render such operations quicker.

Therefore, the need is felt to provide for packaging machines, which allow a timely detection of the longitudinal seal's collapse.

### DISCLOSURE OF INVENTION

It is therefore an object of the present invention to provide an improved packaging machine to overcome, in particular which allows a timely detection of the occurrence of a collapse of the longitudinal seal.

It is a further object of the present invention to provide a method for producing packages to overcome, in particular which allows a timely detection of the occurrence of a collapse of the longitudinal seal.

According to the present invention, there is provided a packaging machine and a method for producing sealed packages according to the independent claims.

Preferred embodiments are claimed in the dependent claims.

### BRIEF DESCRIPTION OF THE DRAWINGS

A non-limiting embodiment of the present invention will be described by way of example with reference to the accompanying drawings, in which:
Figure 1 is a schematic view of a packaging machine according to the present invention, with parts removed for clarity;
Figure 2 is a schematic view of portions of the packaging machine of Figure 1, with parts removed for clarity; and
Figure 3 shows the time-dependent course of two process parameter values, which are monitored during operation of the packaging machine of Figure 1.

### BEST MODES FOR CARRYING OUT THE INVENTION

Number 1 indicates as a whole a packaging machine for producing packages 2, in particular sealed packages 2, of a pourable product, in particular a pourable food product such as pasteurized milk, fruit juice, wine, tomato sauce, etc., from a tube 3 of a web of packaging material 4. In particular, in use, tube 3 extends along a longitudinal axis, in particular having a vertical orientation.

Web of packaging material 4 comprises at least a layer of fibrous material, in particular paper or cardboard, covered on both sides with respective layers of heat-seal plastic material, e.g. polyethylene.

Web of packaging material 4 may also comprise a layer of gas- and light-barrier material, e.g. aluminum foil or ethylene vinyl alcohol (EVOH) film, and at least a first layer and a second layer of heat-seal plastic material. Preferentially, the layer of gas- and light-barrier material being superimposed on the first layer of heat-seal plastic material, and is in turn covered with the second layer of heat-seal plastic material. The second layer of heat-seal plastic material may form the inner face of package 2 eventually contacting the filled pourable food product.

More specifically, web of packaging material 4 may comprise a first face and a second face, in particular the first face being the face of web of packaging material 4 forming the inner face of the formed package 2 eventually contacting the filled pourable food product.

A typical package 2 obtained by packaging machine 1 comprises a longitudinal seam portion and a pair of transversal sealing bands, in particular a transversal top sealing band and a transversal bottom sealing band.

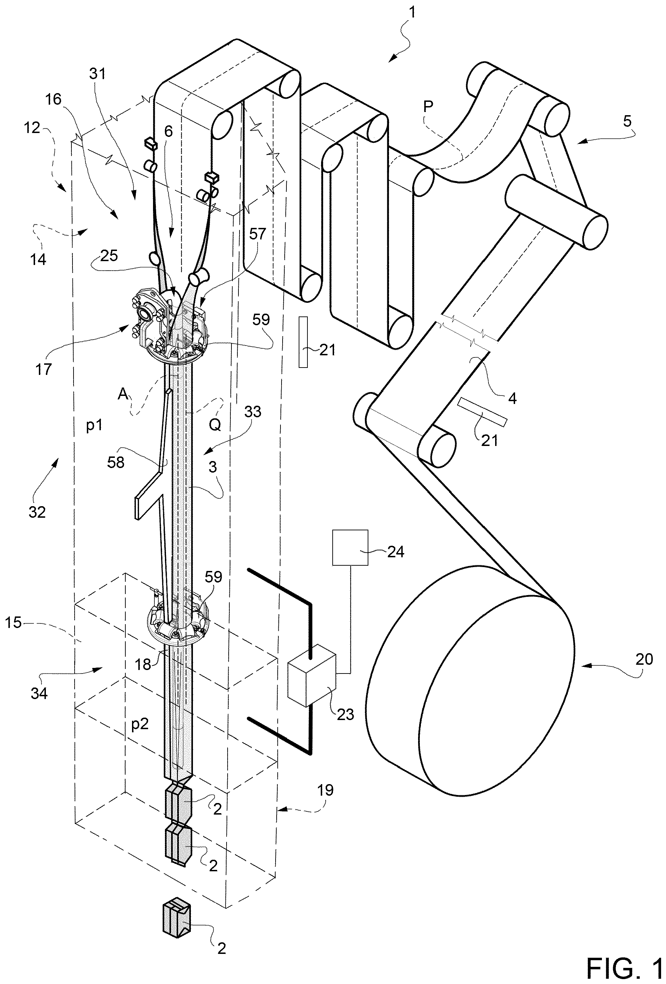

With particular reference to Figure 1, packaging machine 1 may be configured to advance web of packaging material 4 along a web advancement path P, preferably to sterilize web of packaging material 4 during advancement along path P, to form tube 3 from web of packaging material 4 and to fill tube 3 and, preferentially to form single packages 2 from the filled tube 3.

Preferentially, packaging machine 1 may comprise:
- conveying device 5 configured to advance web of packaging material 4 along web advancement path P at least to a tube forming station 6 at which web of packaging material 4 is formed, in use, into tube 3 and for advancing the tube 3 along a tube advancement path Q;
- preferentially, a sterilization apparatus 7 for sterilizing at least a portion of web of packaging material 4, preferentially at least the first face, even more preferentially the first face and the second face, at a sterilization station 8 arranged upstream of tube forming station 6 along web advancement path P;
- an isolation housing 12 extending along a longitudinal axis A, in particular having a vertical orientation, and having at least a main chamber 14 and an auxiliary chamber 15, the latter being arranged downstream of main chamber 14 along tube advancement path Q;
- a tube forming and sealing device 16 at least partially arranged within isolation housing 12, in particular main chamber 14, and being configured to form and longitudinally seal tube 3 at tube forming station 6 within at least a portion of isolation housing 12, in particular main chamber 14; and
- a filling device 17 for filling tube 3 with the pourable product.

In particular, in use, main chamber 14 is kept under aseptic conditions. In particular auxiliary chamber 15 is not under aseptic conditions. In other words, while main chamber 14 is an aseptic chamber and/or is configured to be operated under aseptic conditions, auxiliary chamber 15 is not an aseptic chamber.

In particular, tube forming and sealing device 16 may be configured to form tube 3 having a longitudinal seal portion 18. Even more particular, tube forming and sealing device 16 may be configured to overlap, in use, the lateral edges of web of packaging material 4 and to seal the overlapping lateral edges so as to form the longitudinal seal portion 18. The longitudinal seal portion 18 extends parallel to the tube advancement path Q.

Preferentially, packaging machine 1 also comprises a package forming unit 19 configured to at least form and transversally seal tube 3, preferentially to also transversally cut tube 3, between successive packages 2, in particular during advancement of tube 3 along tube advancement path Q.

Packaging machine 1 may also comprise a magazine unit configured to host web of packaging material 4 at a host station 20. In particular, the magazine unit may comprise at least two loading platforms, each one configured to retain one respective bobbin of web of packaging material 4. Even more particular, in use, while one loading platform may retain the bobbin having web of packaging material 4 in use, while the other loading platform may retain a bobbin of a new web of packaging material 4.

Additionally, packaging machine 1, in particular the magazine unit, may also comprise a splicing device configured to splice the web of packaging material 4 in use (namely, the currently used web of packaging material 4), with the new web of packaging material 4. In more detail, the splicing device may be configured to splice a leading portion of the new web of packaging material 4 to a trailing portion of the web of packaging material 4 in use.

In particular, in use, splicing of the web of packaging material 4 in use and the new web of packaging material 4 may define a spliced portion of the web of packaging material 4 formed as a result of the splicing. The spliced portion of web of packaging material 4 comprises two superimposed layers of fibrous layers. In other words, the thickness of the spliced portion is larger, in particular (substantially) twice as large, as the thickness of the other portions of web of packaging material 4.

Preferentially, packaging machine 1 may also comprise a sensor device having one or more position sensors 21 configured to determine the spliced portion of web of packaging material 4, in particular for determining a relative position of the spliced portion along web advancement path P. As will be explained in more detail further below, knowing the relative position of the spliced portion of web of packaging material 4 along web advancement path P is useful to determine a collapse of the longitudinal portion of the tube more precisely.

Advantageously, packaging machine 1 may also comprise a pressure control device 22 configured to control the pressure within at least portions of isolation housing 12, in particular within at least main chamber 14 and, preferentially also within auxiliary chamber 15.

According to some preferred embodiments, pressure control device 22 is configured to control a first pressure p1 within main chamber 14 and a second pressure p2 different from first pressure p1 within auxiliary chamber 15. In particular, first pressure p1 is higher than second pressure p2.

In particular, in this way pressure control device 22 is configured to control first pressure p1 and second pressure p2 such that contaminations are prevented to enter into main chamber 14.

In a preferred non-limiting embodiment, pressure control device 22 may be configured to control first pressure p1 to range between 20 mbar to 100 mbar above ambient pressure, preferentially 30 mbar to 90 mbar above ambient pressure, even more preferentially 50 mbar to 80 mbar above ambient pressure.

Moreover, pressure control device 22 may be configured to control a pressure difference Δp between first pressure p1 and second pressure p2 (Δp = p1 - p2). In particular, the pressure control device 22 may be configured to maintain pressure difference Δp at a desired and/or defined pressure difference value Δp_{des}.

According to some preferred non-limiting embodiment, the desired and/or defined pressure difference value Δp_{des} may be larger than 8 mbar, in particular larger than 10 mbar, even more particular at least 11 mbar.

According to some possible non-limiting embodiments, the desired and/or defined pressure difference value Δp_{des} may be smaller than 20 mbar, in particular smaller than 15 mbar, even more particular smaller than 12 mbar.

According to a most preferred embodiment, the desired and/or defined pressure difference value Δp_{des} may equal 11 mbar.

It should be noted that the pressure difference Δp is subject to inherent fluctuations around the desired and/or defined pressure difference value Δp_{des} as e.g. visible in the first part of the curve representing the time-dependent course of pressure difference Δp.

Packaging machine 1 may also comprise a pressure measuring device 23 configured to measure, in particular to continuously measure, pressure difference Δp. In particular, pressure measuring device 23 comprises a first pressure measuring unit 56 configured to measure the pressure in the main chamber 14 and a second pressure measuring unit (not illustrated) configured to measure the pressure in the auxiliary chamber 15.

Preferentially, pressure measuring device 23 comprises at least one differential pressure sensor configured to measure pressure difference Δp between the main chamber 14 and the auxiliary chamber 15. The differential pressure sensor may include said first and second pressure measuring units.

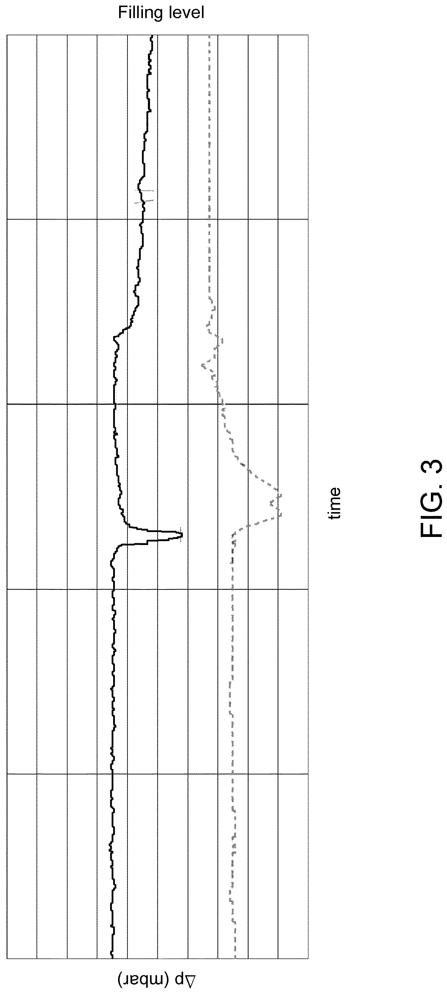

Packaging machine 1 may also comprise an analysis unit 24, in particular operatively connected to pressure measuring device 23, and configured to monitor the time-dependent course of pressure difference Δp (see the curve reproduced in solid lines in Figure 3). Preferably, the analysis unit 24 is the control unit which controls all the functionality of the packaging machine.

Analysis unit 24 is configured to determine a collapse of longitudinal seal portion 18, in particular an opening and/or a losing of the integrity of longitudinal seal portion 18, in dependence of the time-dependent course of pressure difference Δp.

Indeed, the Applicant has found that in the case of a collapse of longitudinal seal portion 18, the measured pressure difference Δp may decrease, in particular significantly decrease (see Figure 3 and the significant change of pressure difference Δp shown with solid line).

In particular, in the case of a collapse of longitudinal seal portion 18, a fluidic connection between main chamber 14 and auxiliary chamber 15 occurs, which leads to first pressure p1 and second pressure p2 approaching one another. Additionally, pressure control device 22 cannot, at least immediately, compensate for the approaching first pressure p1 and second pressure p2.

According to some preferred non-limiting embodiments, analysis unit 24 may be configured to determine a collapse of longitudinal seal portion 18 if a drop of pressure difference Δp may be equal or exceed a threshold drop Δpₜₕᵣₑₛ. In particular, the drop of the pressure difference Δp may be calculated and/or defined as the difference between the desired and/or defined pressure difference value Δp_{des} and the measured pressure difference Δp.

In addition or alternatively, analysis unit 24 may be configured to determine a collapse of longitudinal seal portion 18 if the measured pressure difference Δp may equal or go below a lower limit value Δp_{low}.

Preferentially but not necessarily, threshold drop Δpₜₕᵣₑₛ may be larger than or equal to 1 mbar, in particular 2 mbar, even more particular 3 mbar.

E.g. in the case that the desired and/or determined pressure difference value Δp_{des} may equal 11 mbar and the threshold drop Δpₜₕᵣₑₛ may defined as 3 mbar, analysis unit 24 may determine a collapse of longitudinal seal portion 18 if pressure difference Δp equals or is smaller than 8 mbar. According to such an example, the lower limit value Δp_{low} may be 8 mbar.

The Applicant has found that the threshold drop Δpₜₕᵣₑₛ has to be chosen such to correctly determine a collapse without creating false alarms (i.e. erroneously identifying a collapse). This is preferentially guaranteed with threshold drop Δpₜₕᵣₑₛ may be larger than or equal to 1 mbar, in particular 2 mbar, even more particular 3 mbar.

According to some preferred non-limiting embodiments, threshold drop Δpₜₕᵣₑₛ may be smaller than or equal to 5 mbar, in particular 4 mbar, even more particular 3,5 mbar.

In particular, the definition of threshold drop Δpₜₕᵣₑₛ is chosen such to correctly detect a collapse of longitudinal seal portion 18 (without generating unwanted false alarms; i.e. without erroneously identifying a collapse).

According to some preferred non-limiting embodiments, analysis unit 24 may also be configured to signal the occurrence of a collapse of longitudinal seal portion 18 and/or to trigger an interruption of the production of packages 2 by means of packaging machine 1, when, in use, analysis unit 24 has detected a collapse of longitudinal seal portion 18.

According to some possible non-limiting embodiments, operation of tube forming and sealing device 16 may depend on the position of the sealing portion of web of packaging material 4 as determined by the at least one position sensor 21.

Preferentially, the sensor device 21 may comprise at least two position sensors 21, each one arranged upstream from isolation housing 12, in particular also upstream from sterilization apparatus 7, along web advancement path P.

Even more preferentially, at least one position sensor 21 may be arranged adjacent to the magazine unit (preferably at or downstream of the splicing device). Moreover or as an alternative, at least one position sensor 21 may be arranged adjacent to sterilization apparatus 7 (preferably upstream of the sterilization apparatus 7).

Moreover, tube forming and sealing device 16 may be configured to modify operation, in particular modify an energy transfer, in dependence on whether the splicing portion advances within isolation housing 12, in particular within main chamber 14 or not. In particular, the energy transfer needs to be larger when sealing tube 3 having the splicing portion.

The Applicant has observed that the occurrence of a collapse of longitudinal seal portion 18 may be more likely at the section of longitudinal seal portion 18 originating from the splicing portion, in comparison with the other section of longitudinal seal portion 18.

According to some preferred non-limiting embodiments, analysis unit 24 may also be configured to determine a collapse of longitudinal seal portion 18 in dependence on whether, in particular during the drop of pressure difference Δp, the splicing portion advances within isolation housing 12 and/or while tube 3 having longitudinal seal portion 18 with the section originating from the splicing portion advances within isolation housing 12. In particular, the analysis unit 24 is configured to activate the monitoring of the time-dependent course of the pressure difference Δp while the splicing portion advances within the isolation housing 12 and/or while the tube 3 having longitudinal seal portion 18 with the section originating from the splicing portion advances within isolation housing 12 and to deactivate the monitoring of the time-dependent course of the pressure difference Δp in other moments. In this way, it is possible to reduce false alarms. In fact, the occurrence of a collapse is more likely in the case of longitudinal seal portion 18 having the section originating from the splicing portion.

In another embodiment, the analysis unit 24 is configured to continuously monitor the time-dependent course of the pressure difference Δp, irrespectively of the position of the splicing portion.

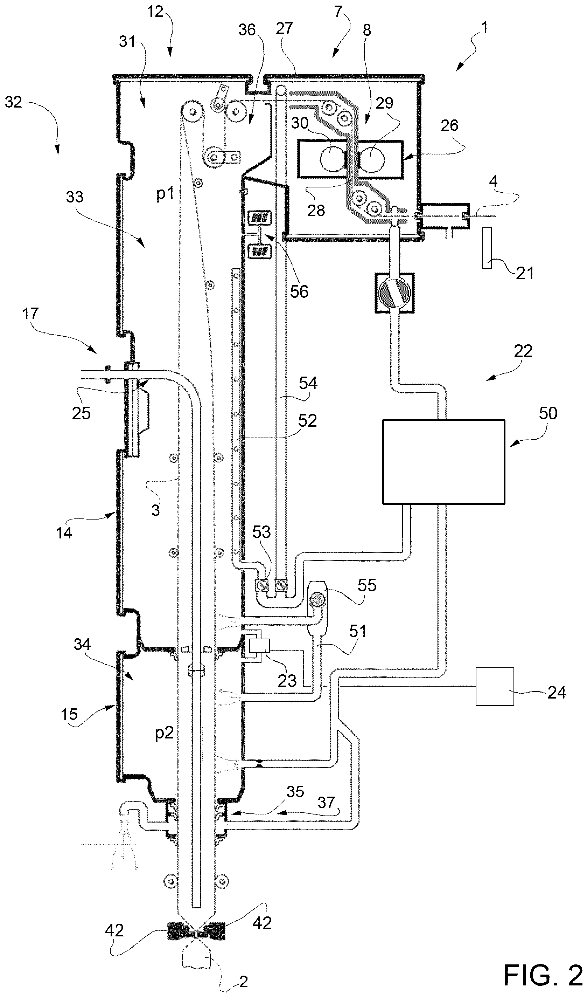

With particular reference to Figures 1 and 2, filling device 17 may comprise a filling pipe 25 being at least partially placed within tube 3 for feeding the pourable product into tube 3. In particular, filling pipe 25 may be in fluid connection with a pourable product storage tank.

According to some preferred non-limiting embodiments, filling device 17 may also comprise a filling level detection device configured to determine a filling level of the pourable food product within tube 3. In particular, filling level detection device may comprise a floater configured to float on the pourable food product column present, in use, within tube 3 and a sensor (e.g. a magnetic sensor) configured read a relative position of the floater within the tube 3.

Filling level detection device may be operatively connected to analysis unit 24 and analysis unit 24 may be configured to monitor the time-dependent course of the filling level (see the dashed curve in Figure 3).

Additionally, analysis unit 24 may be configured to detect a drop in the filling level, in particular a drop being larger or equal than a threshold value, and/or the filling level equaling or being smaller than a lower limit threshold filling level.

Moreover and according to some possible non-limiting embodiments, analysis unit 24 may be configured to detect a collapse of longitudinal seal portion 18 in dependence of the time-dependent course of the filling level, further to and/or instead of in dependence of the time-dependent course of pressure difference Δp.

In more detail, analysis unit 24 may be configured to detect a collapse of longitudinal seal portion 18 in dependence of the drop in the filling level and in dependence of the drop in pressure difference Δp and/or in dependence of the filling level equaling or going below the lower limit threshold filling level and the pressure difference Δp equaling or being smaller than lower limit value Δp_{low}.

In particular, the drop in the filling level may be determined as the difference between a nominal filling level, which shall be maintained during production of packages 2, and the measured filling level.

According to some possible non-limiting embodiments, analysis unit 24 may be configured to detect collapse of longitudinal seal portion 18 if the drop in the filling level equals or is larger than the threshold value and if the drop in pressure difference Δp equals or is larger than the pressure threshold value Δpₜₕᵣₑₛ.

According to some possible non-limiting embodiments the lower limit threshold filling level ranges between 0.2 and 0.7, preferably between 0.3 and 0.5 of the nominal filling level.

In this manner, one reduces the risk of false alarms (i.e. of erroneously identifying a collapse).

According to some preferred non-limiting embodiments, analysis unit 24 may also be configured to determine a collapse of longitudinal seal portion 18:
- if, in use, the splicing portion advances within the isolation housing (12) and/or a section of the longitudinal seal portion (18) originating from the splicing portion advances within the isolation housing (12); and
- if a drop of the pressure difference (Δp) equals or exceeds a threshold drop (Δpₜₕᵣₑₛ) and/or if the measured pressure difference (Δp) equals or is lower than a lower limit value (Δp_{low}); and/or
- if the drop in the filling level equals or is larger than the threshold value.

With particular reference to Figures 1 and 2, sterilization station 8 may be arranged upstream of tube forming station 6 along web advancement path P. In other words, sterilization apparatus 7 may be arranged upstream of isolation housing 12 along path P. In even other words, in use, prior to web of packaging material 4 entering into isolation housing 12, in particular main chamber 14, web of packaging material 4 has been sterilized.

Preferentially, sterilization apparatus 7 may be arranged downstream of the magazine unit along web advancement path P.

In particular, package forming unit 19 may be arranged downstream of isolation housing 12 and tube forming and sealing device 16 along path Q.

In more detail, conveying device 5 may be adapted to advance tube 3 and any intermediate of tube 3 in a manner known as such along path Q, in particular from tube forming station 6 through a portion of main chamber 14 and to and through auxiliary chamber 15, even more particular also towards and at least partially through package forming unit 19.

In particular, with "intermediates of tube 3" any configuration of web of packaging material 4 is meant prior to obtaining the tube structure and after folding of web of packaging material 4 by tube forming and sealing device 16 has started. In other words, the intermediates of tube 3 are a result of the gradual folding of web of packaging material 4 so as to obtain tube 3, in particular by overlapping opposite lateral edges of web of packaging material 4 with one another.

With particular reference to Figure 2, sterilization apparatus 7 may configured to sterilize web of packaging material 4, in particular the first face, even more particular also the second face, by means of physical sterilization such as by means of a sterilization irradiation, in particular an electromagnetic irradiation, even more particular by electron beam irradiation.

Alternatively or in addition, sterilization apparatus 7 could be configured to sterilize web of packaging material 4, in particular the first face, even more particular also the second face, by means of chemical sterilization, in particular by means of hydrogen peroxide.

In more detail, according to the specific non-limiting example embodiment disclosed, sterilization apparatus 7 may comprise an irradiation device 26 arranged at sterilization station 8 and being adapted to sterilize at least the first face, preferentially also the second face, by directing a sterilizing irradiation, in particular electromagnetic irradiation, even more particular electron beam irradiation, onto at least the first face, preferentially also onto the second face, while, in use, web of packaging material 4 advances along a sterilization portion of path P; and
- at least one shielding chamber 27 housing irradiation device 26 and, in particular comprising an advancement channel 28 through which, in use, web of packaging material 4 advances, in use, during the sterilization of web of packaging material 4, in particular the first face, even more particular also the second face.

More specifically, irradiation device 26 may comprise
- at least a first irradiation emitter, in particular a first electron beam emitter 29, configured to direct the sterilizing irradiation, in particular the electromagnetic irradiation, even more particular the electron beam irradiation, in use, on the first face; and
- preferentially also a second irradiation emitter, in particular a second electron beam emitter 30, configured to direct the sterilizing irradiation, in particular the electromagnetic irradiation, even more particular the electron beam irradiation, in use, on the second face.

Preferably, electron beam emitter 29 and electron beam emitter 30 may be arranged side-by-side and distanced from one another so that at least a portion of advancement channel 28 is interposed between electron beam emitter 29 and electron beam emitter 30.

With particular reference to Figures 1 and 2, isolation housing 12 is configured to separate an inner environment 31, in particular having at least one sterile portion, from an outer environment 32.

In more detail, main chamber 14 is the portion of isolation housing 12 in which web of packaging material 4 is, in use, formed into tube 3 and in which web of packaging material 4 is, in use, longitudinally sealed. In other words, main chamber 14 contains the portions of tube forming and sealing device 16, which directly interact with web of packaging material 4 and tube 3 itself for forming and longitudinally sealing tube 3.

In further detail, auxiliary chamber 15 may be arranged (directly) downstream of main chamber 14 along tube advancement path Q. In use, tube 3 advances through auxiliary chamber 15 after its formation and after its longitudinal sealing. In particular, in use, the formed and longitudinally sealed tube 3 advances directly from main chamber 14 into auxiliary chamber 15 (i.e. there is no further chamber arranged between main chamber 14 and auxiliary chamber 15).

In particular, main chamber 14 and auxiliary chamber 15 may be connected, even more particular directly connected, to one another.

Preferentially, main chamber 14 may comprise a respective main inner space 33 defining a portion of inner environment 31, in particular a sterile portion of inner environment 31. In other words, main chamber 14 may be preferentially an aseptic main chamber 14 (i.e. main chamber 14 may be kept aseptic during production).

In even other words, in use, web of packaging material 4 may advance through a portion of main chamber 14 prior to being formed into tube 3. As preferentially inner space 31 may be sterile, sterility of web of packaging material 4 and of tube 3 is maintained.

Preferentially, auxiliary chamber 15 may comprise an auxiliary inner space 34 defining a further portion of inner environment 31. Auxiliary inner space 34 may be an environment not sterile.

Preferentially, isolation housing 12 may also comprise a containment chamber 35 arranged downstream of auxiliary chamber 15 along tube advancement path Q and being configured to receive gas (present within auxiliary chamber 15 itself and) leaking from auxiliary chamber 15.

In particular, containment chamber 35 may be connected to, in particular directly connected to, auxiliary chamber 15. In other words, in use, tube 3 may advance from auxiliary chamber 15 into containment chamber 35.

In the preferred non-limiting embodiment shown, isolation housing 12 may comprise an inlet portion 36 for receiving web of packaging material 4 and an outlet portion 37 for allowing discharging of tube 3 from isolation housing 12 itself, in particular into package forming unit 19.

Preferentially, main chamber 14 may comprise inlet portion 36.

Preferably, containment chamber 35 may define and/or comprise outlet portion 37.

In the preferred non-limiting embodiment shown, sterilization apparatus 7 may be coupled to, in particular connected to, main chamber 14, in particular so that web of packaging material 4 advances from sterilization apparatus 7 into main chamber 14.

Preferably, isolation housing 12 may also comprise at least one main separation wall for separating main chamber 14 and auxiliary chamber 15 from one another.

In particular, the portions of tube forming and sealing device 16, which may be arranged within main chamber 14, may be positioned upstream of main separation wall along tube advancement path Q.

With particular reference to Figure 2, package forming unit 19 may comprise a plurality of complementary pairs of operative units 42 (only schematically shown) configured to at least shape and transversally seal, in particular also to transversally cut, packages 2.

More specifically and with particular reference to Figure 2, pressure control device 22 may comprise:
- a gas conditioning unit 50 configured to direct a pressurized (sterile) gas into main chamber 14 for controlling the first pressure p1; and
- a flow conduct 51 fluidically connecting main chamber 14 with auxiliary chamber 15 and configured to allow a (controlled) flow of gas from main chamber 14 into auxiliary chamber 15, in particular for controlling second pressure p2.

Even more specifically, gas conditioning unit 50 may comprise an injection tube 52 at least partially arranged within main chamber 14 and configured to inject the (sterile) gas into main chamber 14 and, preferably also a control valve 53 for controlling the flow of gas within injection tube 52.

More specifically, injection tube 52 may extend at least partially within main chamber 14 parallel to axis A and comprises a plurality of nozzles for injecting the pressurized gas into main chamber 14.

Additionally, gas conditioning unit 50 may be further configured to at least pressurize the gas, even more preferentially to pressurize and sterilize the gas, in particular at least prior to its injection into main chamber 14.

Moreover, gas conditioning unit 50 may also comprise a further injection tube 54 configured to inject the pressurized (sterile) gas into sterilization apparatus 7, in particular into shielding chamber 27. Preferentially, injection tube 54 may be configured to inject the gas at an interface between sterilization apparatus 7 and isolation housing 12.

Preferentially, pressure control device 22 may also comprise a control valve 55, preferably a ball valve, arranged within flow conduct 51 and being configured to control the flow of gas from main chamber 14 to auxiliary chamber 15 through flow conduct 51, in particular for controlling the second pressure. In particular, the control valve 55 of the control device 22, regulating the flow of gas through the flow conduct 51, controls the pressure difference Δp between first pressure p1 and second pressure p2 (Δp = p1 - p2).

The pressure measuring device 23 comprises the first measuring unit 56 configured to measure and/or determine first pressure p1. Preferably, the pressure control device 22 may be configured to control the control valve 53 as a function of the first pressure as measured and/or determined by the first measuring unit 56.

In a preferred non-limiting embodiment, a pressure within the containment chamber 35 may be about the ambient pressure. It is to be noted that gas being present in auxiliary chamber 15 may also (in a non-controlled manner) leak into containment chamber 35.

In a preferred non-limiting embodiment, pressure control device 22, in particular gas conditioning unit 50, may configured to aspirate gas from sterilization apparatus 7, in particular shielding chamber 27, and to direct it to gas conditioning unit 50 itself, in particular for purposes of recirculation.

With particular reference to Figure 1, tube forming and sealing device 16 may comprise at least a tube forming group 57 configured to form tube 3 from the, in use, advancing web of packaging material 4 and at least a sealing head 58 configured to longitudinally seal tube 3.

More specifically, tube forming group 57 and sealing head 58 may be arranged within main chamber 14.

In more detail, tube forming group 57 may comprise at least a plurality of forming ring assemblies 59, in the particular example shown in Figure 1 two forming ring assemblies 59, arranged within main chamber 14 and being configured to fold web of packaging material 4 gradually into tube 3, in particular by overlapping the respective lateral edges of web of packaging material 4.

In particular, forming ring assemblies 59 may arranged within parallel and spaced apart planes, in particular being orthogonal to axis A, even more specifically having a substantially horizontal orientation. Preferably, the forming ring assembly 59 being arranged downstream of the other one may be designed to also exert a mechanical force on tube 3, in particular for promoting the longitudinal sealing of tube 3.

In use, packaging machine 1 forms packages 2 filled with the pourable product.

In more detail, a method of forming packages 2 comprises the following steps:
- advancing web of packaging material 4 along advancement path P;
- folding web of packaging material 4 within a main chamber 14 of an isolation housing 12 into tube 3 at tube forming station 18;
- longitudinally sealing tube 3 within main chamber 14, thereby forming also longitudinal seal portion 18;
- filling tube 3 with the pourable product;
- advancing tube 3 along path Q through a portion of main chamber 14 and into and through auxiliary chamber 15; and
- obtaining single packages 2 from tube 3 by forming tube 3, transversally sealing tube 3 between successive packages 2 and, in particular transversally cutting tube 3 between successive packages 2 for obtaining single packages 2.

The method also comprises the steps of:
- controlling the pressure, during which first pressure p1 and second pressure p2 are controlled;
- measuring a pressure difference, during which pressure difference Δp is measured, in particular continuously measured;
- monitoring a time-dependent course of the pressure difference Δp, during which the time-dependent course of the pressure difference is monitored; and
- determining a collapse of the longitudinal seal portion 18 in dependence of the time-dependent course of the pressure difference Δp.

In more detail, during the step of controlling, pressure difference Δp is maintained at a desired and/or defined pressure difference value Δp_{des}, in particular under normal operation conditions.

Preferentially, the pressure difference Δp fluctuates around the desired and/or defined pressure difference value Δp_{des}.

Furthermore, during the step of controlling, pressure control device 22 may control pressure difference Δp, in particular by controlling first pressure p1 and second pressure p2.

More specifically, during the step of determining, the collapse of the longitudinal seal portion 18 may be determined if a drop of pressure difference Δp equals or exceeds a threshold drop Δpₜₕᵣₑₛ and/or if the measured pressure difference Δp equals or is lower than a lower limit value Δp_{low}.

In particular, the step of determining and the step of monitoring may be executed by analysis unit 24.

The method of forming packages 2 may further comprise the steps of:
- detecting a filling level of the pourable food product within tube 3, in particular by the filling detection device; and
- monitoring a time-dependent course of the filling level.

Additionally, during the step of determining, the collapse of longitudinal seal portion 18 may be also determined in dependence of the time-dependent course of the filling level.

In particular, the collapse of longitudinal seal portion 18 may also be determined in dependence of a measured drop in the filling level, in particular being larger than a determined filling level drop.

Additionally or in alternative, the collapse of longitudinal seal portion 18 may also be determined if the filling level equals or is smaller than a lower limit threshold filling level.

By combining the criteria related to the pressure difference Δp and the one related to the filling level, it is possible to reduce a risk of erroneously determining a collapse of longitudinal seal portion 18.

In further detail, during the step of detecting, the relative position of the floater is detected (in order to measure the filling level).

The method of forming packages 2 may also comprise a step of splicing, during which the web of packaging material 4 in use is spliced with the new web of packaging material 4. In particular, during the step of splicing, the trailing portion of the web of packaging material 4 in use is spliced together with the leading portion of the new web of packaging material.

Moreover, during the step of splicing one obtains web of packaging material 4 having the spliced portion.

Advantageously, during the step of determining, a collapse of longitudinal seal portion 18 is determined also in dependence on whether, in use, the splicing portion advances within isolation housing 12 and/or a section of the longitudinal seal portion 18 originating from the splicing portion advances within the isolation housing 12.

By combining this criterion together with at least the criterion related to difference pressure Δp one decreases the risk of erroneously detecting a collapse of longitudinal seal portion 18. Additionally, for detecting the longitudinal seal portion 18, one may also consider the criterion related to the filling level.

According to some possible non-limiting embodiments, during the step of determining, a collapse of longitudinal seal portion 18 may be determined:
- if, in use, the splicing portion advances within the isolation housing 12 and/or a section of the longitudinal seal portion 18 originating from the splicing portion advances within the isolation housing 12; and
- if a drop of the pressure difference Δp equals or exceeds a threshold drop Δpₜₕᵣₑₛ and/or if the measured pressure difference Δp equals or is lower than a lower limit value Δp_{low} and/or
- if the drop in the filling level equals or is larger than the threshold value.

The method of forming packages 2 may also comprise a step of detecting the position of the splicing portion along the web advancement path P by means of the sensor device, in particular the one or more position sensors 21. Moreover, on whether the splicing portion and/or the section of the longitudinal seal portion 18 originating from the splicing portion may advance within isolation housing 12 may be determined from knowing the relative position and operation of conveying device 5.

The method of forming packages 2 may also comprise a step of signaling, during which the occurrence of a collapse of the longitudinal seal portion 18 is signaled. In this way, it is possible to alert an operator e.g. such that the operator can decide to interrupt the formation of packages 2.

Alternatively or in addition, the method of forming packages 2 may also comprise a step of triggering, during which an interruption of the formation of packages 2 is interrupted if during the step of determining, a collapse of the longitudinal seal portion 18 is determined.

In a preferred non-limiting embodiment, the method also comprises the step of sterilizing at least the first face, in particular also the second face, of web of packaging material 4 at sterilization station 8. In particular, the step of sterilizing is executed before the step of folding web of packaging material 4. Even more particularly, the step of sterilizing is executed prior to web of packaging material entering into isolation housing 12.

During the step of folding tube 3, tube forming and sealing device 16 gradually overlaps the opposite lateral edges of web of packaging material 4 with one another so as to form a longitudinal seal.

During the step of longitudinally sealing tube 3, tube forming and sealing device 16 seals the overlapped opposite lateral edges of web of packaging material 4 to obtain the longitudinal seal.

During the step of advancing tube 3, conveying device 5 advances tube 3 (and any intermediates of tube 3) along path Q to package forming unit 19.

In particular, conveying device 5 advances tube 3 through a portion of main chamber 14, to and through auxiliary chamber 15, and preferably to and through containment chamber 35.

During the step of filling tube 3, filling device 17 fills the pourable product into the longitudinally sealed tube 3.

During the step of obtaining single packages 2, package forming unit 19 forms and transversally seals tube 3 between successive packages 2 and, preferentially, also transversally cuts tube 3 between successive packages 2.

In more detail, during the step of sterilizing web of packaging material 4, at least a sub-step of directing a sterilizing irradiation, in particular electromagnetic irradiation, even more particular electron beam irradiation, onto at least the first face, preferentially also onto the second face, of web of packaging material 4 is executed.

The advantages of packaging machine 1 and/or the method according to the present invention will be clear from the foregoing description.

In particular, it is possible to determine in a timely manner the occurrence of a collapse of the longitudinal seal portion 18. This again allows to take the needed actions in a timely manner.

Clearly, changes may be made to packaging machine 1 and/or the method as described herein without, however, departing from the scope of protection as defined in the accompanying claims.

## Claims

1. A packaging machine (1) for producing packages (2) of a pourable product from a web of packaging material (4) advancing along a web advancement path (P), the packaging machine (1) comprises:
- a conveying device (5) for advancing the web of packaging material (4) along the web advancement path (P) to a tube forming station (6) at which the web of packaging material (4) is formed, in use, into a tube (3) and for advancing the tube (3) along a tube advancement path (Q);
- an isolation housing (12) having a main chamber (14) and an auxiliary chamber (15) arranged downstream form the main chamber (14) along the tube advancement path (Q) ;
- a tube forming and sealing device (16) at least partially arranged within the main chamber (14) and being configured to form and longitudinally seal the tube (3), in use, within the main chamber (14), the tube (3) having a longitudinal seal portion (18);
- a filling device (17) for filling the tube (3) with the pourable product;
- a pressure control device (22) configured to control a first pressure (p1) within the main chamber (14) and a second pressure (p2) within the auxiliary chamber (15), the second pressure (p2) being different from the first pressure (p1);
- a pressure measuring device (23) configured to measure a pressure difference (Δp) between the first pressure (p1) and the second pressure (p2); and
- an analysis unit (24) operatively connected to the pressure measuring device (23) and configured to monitor a time-dependent course of the pressure difference (Δp);
wherein the analysis unit (24) is configured to determine a collapse of the longitudinal seal portion (18) in dependence of the time-dependent course of the pressure difference (Δp).

2. The packaging machine (1) according to claim 1, wherein the pressure control device (22) is configured to maintain the pressure difference (Δp) between the first pressure (p1) and the second pressure (p2) at a desired and/or defined pressure difference value (Δp_{des});
wherein the desired and/or defined pressure difference value (Δp_{des}) is higher than 8 mbar, in particular higher than 10 mbar, even more particular at least 11 mbar, and/or equals 11 mbar.

3. Packaging machine (1) according to claim 1 or 2, wherein the analysis unit (24) is configured to determine the collapse of the longitudinal seal portion (18) if a drop of the pressure difference (Δp) equals or exceeds a threshold drop (Δpₜₕᵣₑₛ) and/or if the measured pressure difference (Δp) equals or is lower than a lower limit value (Δp_{low}).

4. Packaging machine (1) according to any one of the preceding claims, wherein the filling device (17) comprises a filling level detection device configured to determine a filling level of the pourable food product within the tube (3);
wherein the filling level detection device is operatively connected to the analysis unit (24) and the analysis unit (24) is configured to monitor a time-dependent course of the filling level;
wherein the analysis unit (24) is configured to determine a collapse of the longitudinal seal portion (18) also in dependence of the time-dependent course of the filling level.

5. Packaging machine (1) according to claim 4, wherein the analysis unit (24) is configured to detect a drop in the filling level and/or the filling level equaling or being smaller than a lower limit threshold filling level;
wherein the analysis unit (24) is also configured to detect a collapse of the longitudinal seal portion (18) in dependence of a measured drop in the filling level and/or if the filling level equals or is smaller than the lower limit threshold filling level.

6. Packaging machine (1) according to any one of the preceding claims, further comprising a splicing device configured to splice a web of packaging material (4) in use, with a new web of packaging material (4); wherein the web of packaging material (4), obtained by the splicing of the web of packaging material (4) in use, with the new web of packaging material (4), has a spliced portion formed as a result of the splicing;
wherein the analysis unit (24) is also configured to determine a collapse of the longitudinal seal portion (18) in dependence on whether, in use, the splicing portion advances within the isolation housing (12) and/or a section of the longitudinal seal portion (18) originating from the splicing portion advances within the isolation housing (12).

7. Packaging machine (1) according to claim 6, wherein the analysis unit (24) is configured to determine a collapse of the longitudinal seal portion (18):
- if, in use, the splicing portion advances within the isolation housing (12) and/or a section of the longitudinal seal portion (18) originating from the splicing portion advances within the isolation housing (12); and
- if a drop of the pressure difference (Δp) equals or exceeds a threshold drop (Δpₜₕᵣₑₛ) and/or if the measured pressure difference (Δp) equals or is lower than a lower limit value (Δp_{low}).

8. Packaging machine (1) according to any one of the preceding claims, wherein the analysis unit (24) is configured to signal the occurrence of a collapse of the longitudinal seal portion (18) and/or to trigger an interruption of the production of the packages by means of the packaging machine (1).

9. Packaging machine (1) according to any one of the preceding claims, wherein the main chamber (14) is configured to be operated under aseptic conditions.

10. Method for producing packages (2) of a pourable product comprising the steps of:
- advancing a web of packaging material (4) along a web advancement path (P) to a tube forming station (6); and
- folding the web of packaging material (4) within a main chamber (14) of an isolation housing (12) into a tube (3) at the tube forming station (6);
- longitudinally sealing the tube (3) within the main chamber (14) such that the tube (3) has a longitudinal seal portion (18);
- advancing the tube (3) along a tube advancement path (Q) through a portion of the main chamber (14) and into and through an auxiliary chamber (15) of the isolation housing (12) arranged downstream of the main chamber (14) along the tube advancement path (Q); and
- filling the formed tube (3) with the pourable product; and
- controlling the pressure, during which a first pressure (p1) within the main chamber (14) and a second pressure (p2) within the auxiliary chamber (15) different from the second pressure (p2) are controlled;
- measuring a pressure difference, during which a pressure difference (Δp) between the first pressure (p1) and the second pressure (p2) is measured;
- monitoring a time-dependent course of the pressure difference (Δp); and
- determining a collapse of the longitudinal seal portion (18) in dependence of the time-dependent course of the pressure difference (Δp).

11. The method according to claim 10, wherein during the step of controlling, the pressure difference (Δp) between the first pressure (p1) and the second pressure (p2) is maintained at a desired and/or defined pressure difference value (Δp_{des});
wherein the desired and/or defined pressure difference value (Δp_{des}) is larger than 8 mbar, in particular larger than 10 mbar, even more particular at least 11 mbar, and/or equals 11 mbar.

12. Method according to claim 10 or 11, wherein during the step of determining, the collapse of the longitudinal seal portion (18) is determined if a drop of the pressure difference (Δp) equals or exceeds a threshold drop (Δpₜₕᵣₑₛ) and/or if the measured pressure difference (Δp) equals or is lower than a lower limit value (Δp_{low}).

13. Method according to any one of the claims 10 to 12, further comprising the steps of:
- detecting a filling level of the pourable food product within the tube (3); and
- monitoring a time-dependent course of the filling level;
wherein during the step of determining, the collapse of the longitudinal seal portion (18) is also determined in dependence of the time-dependent course of the filling level.

14. Method according to claim 13, wherein during the step of determining, the collapse of the longitudinal seal portion (18) is also determined in dependence of a measured drop in the filling level and/or if the filling level equals or is smaller than a lower limit threshold filling level.

15. Method according to any one of claims 10 to 14, further comprising a step of splicing, during which a web of packaging material (4) in use is spliced with a new web of packaging material (4); the web of packaging material (4) obtained by the splicing having a spliced portion formed as a result of the splicing;
wherein during the step of determining, a collapse of the longitudinal seal portion (18) is determined also in dependence on whether, in use, the splicing portion advances within the isolation housing (12) and/or a section of the longitudinal seal portion (18) originating from the splicing portion advances within the isolation housing (12).

## Patentansprüche

1. Verpackungsmaschine (1) zum Herstellen von Verpackungen (2) eines gießfähigen Produkts aus einer Bahn aus Verpackungsmaterial (4), die sich entlang eines Bahnvorschubwegs (P) vorwärtsbewegt, wobei die Verpackungsmaschine (1) Folgendes umfasst:
- eine Fördervorrichtung (5) zum Vorwärtsbewegen der Verpackungsmaterialbahn (4) entlang des Bahnvorschubweges (P) zu einer Röhrenbildungsstation (6), an der die Verpackungsmaterialbahn (4) im Gebrauch zu einer Röhre (3) geformt wird, und zum Vorwärtsbewegen der Röhre (3) entlang eines Röhrenvorschubweges (Q);
- ein Isolationsgehäuse (12) mit einer Hauptkammer (14) und einer stromabwärts der Hauptkammer (14) entlang des Röhrenvorschubweges (Q) angeordneten Hilfskammer (15);
- eine Röhrenformungs- und -abdichtvorrichtung (16), die zumindest teilweise innerhalb der Hauptkammer (14) angeordnet und dazu ausgelegt ist, die Röhre (3) im Gebrauch innerhalb der Hauptkammer (14) zu bilden und in Längsrichtung abzudichten, wobei die Röhre (3) einen Längsdichtungsabschnitt (18) aufweist;
- eine Füllvorrichtung (17) zum Füllen der Röhre (3) mit dem gießfähigen Produkt;
- eine Drucksteuerungsvorrichtung (22), die dazu ausgelegt ist, einen ersten Druck (p1) innerhalb der Hauptkammer (14) und einen zweiten Druck (p2) innerhalb der Hilfskammer (15) zu steuern, wobei der zweite Druck (p2) von dem ersten Druck (p1) verschieden ist;
- eine Druckmessvorrichtung (23), die dazu ausgelegt ist, eine Druckdifferenz (Δp) zwischen dem ersten Druck (p1) und dem zweiten Druck (p2) zu messen; und
- eine Analyseeinheit (24), die mit der Druckmessvorrichtung (23) wirkverbunden und dazu ausgelegt ist, einen zeitabhängigen Verlauf der Druckdifferenz (Δp) zu überwachen;
wobei die Analyseeinheit (24) dazu ausgelegt ist, einen Zusammenbruch des Längsdichtungsabschnitts (18) in Abhängigkeit vom zeitabhängigen Verlauf der Druckdifferenz (Δp) zu bestimmen.

2. Verpackungsmaschine (1) nach Anspruch 1, wobei die Drucksteuerungsvorrichtung (22) dazu ausgelegt ist, die Druckdifferenz (Δp) zwischen dem ersten Druck (p1) und dem zweiten Druck (p2) auf einem gewünschten und/oder definierten Druckdifferenzwert (Δp_{des}) zu halten;
wobei der gewünschte und/oder definierte Druckdifferenzwert (Δp_{des}) höher als 8 mbar, insbesondere höher als 10 mbar, noch spezieller mindestens 11 mbar ist und/oder gleich 11 mbar ist.

3. Verpackungsmaschine (1) nach Anspruch 1 oder 2, wobei die Analyseeinheit (24) dazu ausgelegt ist, den Zusammenbruch des Längsdichtungsabschnitts (18) zu bestimmen, wenn ein Abfall der Druckdifferenz (Δp) gleich oder größer als ein Schwellenabfall (Δpₜₕᵣₑₛ) ist und/oder wenn die gemessene Druckdifferenz (Δp) gleich oder kleiner als ein unterer Grenzwert (Δp_{low}) ist.

4. Verpackungsmaschine (1) nach einem der vorhergehenden Ansprüche, wobei die Füllvorrichtung (17) eine Füllstandserfassungsvorrichtung umfasst, die dazu ausgelegt ist, einen Füllstand des gießfähigen Lebensmittelprodukts innerhalb der Röhre (3) zu bestimmen;
wobei die Füllstandserfassungsvorrichtung mit der Analyseeinheit (24) wirkverbunden ist und die Analyseeinheit (24) dazu ausgelegt ist, einen zeitabhängigen Verlauf des Füllstands zu überwachen;
wobei die Analyseeinheit (24) dazu ausgelegt ist, einen Zusammenbruch des Längsdichtungsabschnitts (18) auch in Abhängigkeit vom zeitabhängigen Verlauf des Füllstands zu bestimmen.

5. Verpackungsmaschine (1) nach Anspruch 4, wobei die Analyseeinheit (24) dazu ausgelegt ist, einen Abfall des Füllstands und/oder des Füllstands zu erkennen, der gleich oder kleiner als ein unterer Grenzschwellenfüllstand ist;
wobei die Analyseeinheit (24) auch dazu ausgelegt ist, einen Zusammenbruch des Längsdichtungsabschnitts (18) in Abhängigkeit von einem gemessenen Abfall des Füllstands zu erkennen und/oder wenn der Füllstand gleich oder kleiner als der untere Grenzschwellenfüllstand ist.

6. Verpackungsmaschine (1) nach einem der vorhergehenden Ansprüche, ferner umfassend eine Spleißvorrichtung, die dazu ausgelegt ist, eine Verpackungsmaterialbahn (4) im Gebrauch mit einer neuen Verpackungsmaterialbahn (4) zu spleißen; wobei die Verpackungsmaterialbahn (4), die durch das Spleißen der Verpackungsmaterialbahn (4) im Gebrauch erhalten wird, mit der neuen Verpackungsmaterialbahn (4) einen gespleißten Abschnitt aufweist, der als Ergebnis des Spleißens gebildet ist;
wobei die Analyseeinheit (24) auch dazu ausgelegt ist, einen Zusammenbruch des Längsdichtungsabschnitts (18) in Abhängigkeit davon zu bestimmen, ob sich der Spleißabschnitt im Gebrauch innerhalb des Isolationsgehäuses (12) vorwärtsbewegt und/oder ein Abschnitt des Längsdichtungsabschnitts (18), der von dem Spleißabschnitt stammt, innerhalb des Isolationsgehäuses (12) vorwärtsbewegt.

7. Verpackungsmaschine (1) nach Anspruch 6, wobei die Analyseeinheit (24) dazu ausgelegt ist, einen Zusammenbruch des Längsdichtungsabschnitts (18) zu bestimmen:
- wenn sich im Gebrauch der Spleißabschnitt innerhalb des Isolationsgehäuses (12) vorwärtsbewegt und/oder ein Abschnitt des Längsdichtungsabschnitts (18), der von dem Spleißabschnitt stammt, innerhalb des Isolationsgehäuses (12) vorwärtsbewegt; und
- wenn ein Abfall der Druckdifferenz (Δp) gleich oder größer als ein Schwellenabfall (Δpₜₕᵣₑₛ) ist und/oder wenn die gemessene Druckdifferenz (Δp) gleich oder kleiner als ein unterer Grenzwert (Δp_{low}) ist.

8. Verpackungsmaschine (1) nach einem der vorhergehenden Ansprüche, wobei die Analyseeinheit (24) dazu ausgelegt ist, das Auftreten eines Zusammenbruchs des Längsdichtungsabschnitts (18) zu signalisieren und/oder eine Unterbrechung der Herstellung der Verpackungen mittels der Verpackungsmaschine (1) auszulösen.

9. Verpackungsmaschine (1) nach einem der vorhergehenden Ansprüche, wobei die Hauptkammer (14) dazu ausgelegt ist, unter aseptischen Bedingungen betrieben zu werden.

10. Verfahren zum Herstellen von Verpackungen (2) eines gießfähigen Produkts, umfassend die Schritte:
- Vorwärtsbewegen einer Verpackungsmaterialbahn (4) entlang eines Bahnvorschubwegs (P) zu einer Röhrenbildungsstation (6); und
- Falten der Verpackungsmaterialbahn (4) innerhalb einer Hauptkammer (14) eines Isolationsgehäuses (12) in eine Röhre (3) an der Röhrenbildungsstation (6);
- Längsabdichten der Röhre (3) innerhalb der Hauptkammer (14) derart, dass die Röhre (3) einen Längsdichtungsabschnitt (18) aufweist;
- Vorwärtsbewegen der Röhre (3) entlang eines Röhrenvorschubweges (Q) durch einen Abschnitt der Hauptkammer (14) und in und durch eine Hilfskammer (15) des Isolationsgehäuses (12), die stromabwärts der Hauptkammer (14) entlang des Röhrenvorschubweges (Q) angeordnet ist; und
- Füllen der geformten Röhre (3) mit dem gießfähigen Produkt; und
- Steuern des Drucks, bei dem ein erster Druck (p1) innerhalb der Hauptkammer (14) und ein zweiter Druck (p2) innerhalb der Hilfskammer (15), der von dem zweiten Druck (p2) verschieden ist, gesteuert werden;
- Messen einer Druckdifferenz, bei dem eine Druckdifferenz (Δp) zwischen dem ersten Druck (p1) und dem zweiten Druck (p2) gemessen wird;
- Überwachen eines zeitabhängigen Verlaufs der Druckdifferenz (Δp); und
- Bestimmen eines Zusammenbruchs des Längsdichtungsabschnitts (18) in Abhängigkeit vom zeitabhängigen Verlauf der Druckdifferenz (Δp).

11. Verfahren nach Anspruch 10, wobei während des Schritts des Steuerns die Druckdifferenz (Δp) zwischen dem ersten Druck (p1) und dem zweiten Druck (p2) auf einem gewünschten und/oder definierten Druckdifferenzwert (Δp_{des}) gehalten wird;
wobei der gewünschte und/oder definierte Druckdifferenzwert (Δp_{des}) größer als 8 mbar, insbesondere größer als 10 mbar, noch spezieller mindestens 11 mbar ist und/oder gleich 11 mbar ist.

12. Verfahren nach Anspruch 10 oder 11, wobei während des Schritts des Bestimmens den Zusammenbruch des Längsdichtungsabschnitts (18) bestimmt wird, wenn ein Abfall der Druckdifferenz (Δp) gleich oder größer als ein Schwellenabfall (Δp ₜₕᵣₑₛ) ist und/oder wenn die gemessene Druckdifferenz (Δp) gleich oder kleiner als ein unterer Grenzwert (Δp_{low}) ist.

13. Verfahren nach einem der Ansprüche 10 bis 12, ferner umfassend die Schritte:
- Erfassen eines Füllstands des gießfähigen Lebensmittelprodukts innerhalb der Röhre (3); und
- Überwachen eines zeitabhängigen Verlaufs des Füllstands;
wobei während des Schritts des Bestimmens auch der Zusammenbruch des Längsdichtungsabschnitts (18) in Abhängigkeit vom zeitabhängigen Verlauf des Füllstands bestimmt wird.

14. Verfahren nach Anspruch 13, wobei während des Schritts des Bestimmens auch der Zusammenbruch des Längsdichtungsabschnitts (18) in Abhängigkeit von einem gemessenen Abfall des Füllstands und/oder, wenn der Füllstand gleich oder kleiner als ein unterer Grenzfüllstand ist, bestimmt wird.

15. Verfahren nach einem der Ansprüche 10 bis 14, ferner umfassend einen Schritt des Spleißens, bei dem eine Bahn aus Verpackungsmaterial (4) im Gebrauch mit einer neuen Bahn aus Verpackungsmaterial (4) gespleißt wird, wobei die Bahn aus Verpackungsmaterial (4), die durch das Spleißen erhalten wird, einen gespleißten Abschnitt aufweist, der als Ergebnis des Spleißens gebildet wird; wobei während des Schritts des Bestimmens ein Zusammenbruch des Längsdichtungsabschnitts (18) auch in Abhängigkeit davon bestimmt wird, ob sich im Gebrauch der Spleißabschnitt innerhalb des Isolationsgehäuses (12) vorwärtsbewegt und/oder ein Abschnitt des Längsdichtungsabschnitts (18), der von dem Spleißabschnitt stammt, innerhalb des Isolationsgehäuses (12) vorwärtsbewegt.

## Revendications

1. Machine d'emballage (1) pour produire des emballages (2) d'un produit versable à partir d'une bande de matériau d'emballage (4) avançant le long d'un trajet d'avancée de bande (P), la machine d'emballage (1) comprenant :
- un dispositif de transport (5) pour faire avancer la bande de matériau d'emballage (4) le long du trajet d'avancée de bande (P) vers une station de formation de tube (6) à laquelle la bande de matériau d'emballage (4) est formée, en utilisation, en un tube (3) et pour faire avancer le tube (3) le long d'un trajet d'avancée de tube (Q) ;
- un logement d'isolation (12) ayant une chambre principale (14) et une chambre auxiliaire (15) disposée en aval de la chambre principale (14) le long du trajet d'avancée de tube (Q) ;
- un dispositif de formation et de scellement de tube (16) au moins en partie disposé à l'intérieur de la chambre principale (14) et conçu pour former et sceller longitudinalement le tube (3), en utilisation, à l'intérieur de la chambre principale (14), le tube (3) ayant une partie de scellement longitudinal (18) ;
- un dispositif de remplissage (17) pour remplir le tube (3) avec le produit versable ;
- un dispositif de régulation de pression (22) configuré pour réguler une première pression (p1) à l'intérieur de la chambre principale (14) et une seconde pression (p2) à l'intérieur de la chambre auxiliaire (15), la seconde pression (p2) étant différente de la première pression (p1) ;
- un dispositif de mesure de pression (23) configuré pour mesurer une différence de pression (Δp) entre la première pression (p1) et la seconde pression (p2) ; et
- une unité d'analyse (24) connectée en fonctionnement au dispositif de mesure de pression (23) et configurée pour surveiller un cours en fonction du temps de la différence de pression (Δp) ;
dans laquelle l'unité d'analyse (24) est configurée pour déterminer un affaissement de la partie de scellement longitudinal (18) en fonction du cours en fonction du temps de la différence de pression (Δp).

2. Machine d'emballage (1) selon la revendication 1, dans laquelle le dispositif de régulation de pression (22) est configuré pour maintenir la différence de pression (Δp) entre la première pression (p1) et la seconde pression (p2) à une valeur de différence de pression souhaitée et/ou définie (Δp_{des}) ;
dans laquelle la valeur de différence de pression souhaitée et/ou définie (Δp_{des}) est supérieure à 8 mbar, en particulier supérieure à 10 mbar, préférablement d'au moins 11 mbar, et/ou est égale à 11 mbar.

3. Machine d'emballage (1) selon la revendication 1 ou 2, dans laquelle l'unité d'analyse (24) est configurée pour déterminer l'affaissement de la partie de scellement longitudinal (18) si une chute de la différence de pression (Δp) est égale ou supérieure à une chute seuil (Δpₜₕᵣₑₛ) et/ou si la différence de pression mesurée (Δp) est égale ou inférieure à une valeur limite inférieure (Δp_{low}).

4. Machine d'emballage (1) selon l'une quelconque des revendications précédentes, dans laquelle le dispositif de remplissage (17) comprend un dispositif de détection de niveau de remplissage configuré pour déterminer un niveau de remplissage du produit alimentaire versable à l'intérieur du tube (3) ;
dans laquelle le dispositif de détection de niveau de remplissage est connecté en fonctionnement à l'unité d'analyse (24) et l'unité d'analyse (24) est configurée pour surveiller un cours en fonction du temps du niveau de remplissage ;
dans laquelle l'unité d'analyse (24) est configurée pour déterminer un affaissement de la partie de scellement longitudinal (18) également en fonction du cours en fonction du temps du niveau de remplissage.

5. Machine d'emballage (1) selon la revendication 4, dans laquelle l'unité d'analyse (24) est configurée pour détecter une chute du niveau de remplissage et/ou le fait que le niveau de remplissage est inférieur ou égal à un niveau de remplissage seuil de limite inférieure ;
dans laquelle l'unité d'analyse (24) est également configurée pour détecter un affaissement de la partie de scellement longitudinal (18) en fonction d'une chute mesurée du niveau de remplissage et/ou si le niveau de remplissage est inférieur ou égal au niveau de remplissage seuil de limite inférieure.

6. Machine d'emballage (1) selon l'une quelconque des revendications précédentes, comprenant en outre un dispositif de collage configuré pour coller une bande de matériau d'emballage (4) en utilisation, avec une nouvelle bande de matériau d'emballage (4) ; dans laquelle la bande de matériau d'emballage (4) obtenue par le collage de la bande de matériau d'emballage (4) en utilisation, avec la nouvelle bande de matériau d'emballage (4) a une partie collée formée en conséquence du collage ;
dans laquelle l'unité d'analyse (24) est également configurée pour déterminer un affaissement de la partie de scellement longitudinal (18) en fonction de si, en utilisation, la partie de collage avance à l'intérieur du logement d'isolation (12) et/ou une section de la partie de scellement longitudinal (18) provenant de la partie de collage avance à l'intérieur du logement d'isolation (12).

7. Machine d'emballage (1) selon la revendication 6, dans laquelle l'unité d'analyse (24) est configurée pour déterminer un affaissement de la partie de scellement longitudinal (18) :
- si, en utilisation, la partie de collage avance à l'intérieur du logement d'isolation (12) et/ou une section de la partie de scellement longitudinal (18) provenant de la partie de collage avance à l'intérieur du logement d'isolation (12) ; et
- si une chute de la différence de pression (Δp) est égale ou supérieure à une chute seuil (Δpₜₕᵣₑₛ) et/ou si la différence de pression mesurée (Δp) est inférieure ou égale à une valeur limite inférieure (Δp_{low}).

8. Machine d'emballage (1) selon l'une quelconque des revendications précédentes, dans laquelle l'unité d'analyse (24) est configurée pour signaler la survenue d'un affaissement de la partie de scellement longitudinal (18) et/ou pour déclencher une interruption de la production d'emballages au moyen de la machine d'emballage (1).

9. Machine d'emballage (1) selon l'une quelconque des revendications précédentes, dans laquelle la chambre principale (14) est conçue pour fonctionner dans des conditions aseptiques.

10. Procédé de production d'emballages (2) d'un produit versable comprenant les étapes suivantes :
- l'avancée d'une bande de matériau d'emballage (4) le long d'un trajet d'avancée de bande (P) vers une station de formation de tube (6) ; et
- le pliage de la bande de matériau d'emballage (4) à l'intérieur d'une chambre principale (14) d'un logement d'isolation (12) en un tube (3) à la station de formation de tube (6) ;
- le scellement longitudinal du tube (3) à l'intérieur de la chambre principale (14) de telle sorte que le tube (3) possède une partie de scellement longitudinal (18) ;
- l'avancée du tube (3) le long d'un trajet d'avancée de tube (Q) à travers une partie de la chambre principale (14) et dans et à travers une chambre auxiliaire (15) du logement d'isolation (12) disposée en aval de la chambre principale (14) le long du trajet d'avancée de tube (Q) ; et
- le remplissage du tube formé (3) avec le produit versable ; et
- la régulation de la pression, pendant laquelle une première pression (p1) à l'intérieur de la chambre principale (14) et une seconde pression (p2) à l'intérieur de la chambre auxiliaire (15) différente de la seconde pression (p2) sont régulées ;
- la mesure d'une différence de pression, pendant laquelle une différence de pression (Δp) entre la première pression (p1) et la seconde pression (p2) est mesurée ;
- la surveillance d'un cours en fonction du temps de la différence de pression (Δp) ; et
- la détermination d'un affaissement de la partie de scellement longitudinal (18) en fonction du cours en fonction du temps de la différence de pression (Δp).

11. Procédé selon la revendication 10, dans lequel pendant l'étape de régulation, la différence de pression (Δp) entre la première pression (p1) et la seconde pression (p2) est maintenue à une valeur de différence de pression souhaitée et/ou définie (Δp_{des}) ;
dans lequel la valeur de différence de pression souhaitée et/ou définie (Δp_{des}) est supérieure à 8 mbar, en particulier supérieure à 10 mbar, préférablement d'au moins 11 mbar, et/ou est égale à 11 mbar.

12. Procédé selon la revendication 10 ou 11, dans lequel pendant l'étape de détermination, l'affaissement de la partie de scellement longitudinal (18) est déterminée si une chute de la différence de pression (Δp) est égale ou supérieure à une chute seuil (Δpₜₕᵣₑₛ) et/ou si la différence de pression mesurée (Δp) est égale ou inférieure à une valeur limite inférieure (Δp_{low}).

13. Procédé selon l'une quelconque des revendications 10 à 12, comprenant en outre les étapes suivantes :
- la détection d'un niveau de remplissage du produit alimentaire versable à l'intérieur du tube (3) ; et
- la surveillance d'un cours en fonction du temps du niveau de remplissage ;
dans lequel pendant l'étape de détermination, l'affaissement de la partie de scellement longitudinal (18) est également déterminé en fonction du cours en fonction du temps du niveau de remplissage.

14. Procédé selon la revendication 13, dans lequel pendant l'étape de détermination, l'affaissement de la partie de scellement longitudinal (18) est également déterminé en fonction d'une chute mesurée du niveau de remplissage et/ou si le niveau de remplissage est inférieur ou égal au niveau de remplissage seuil de limite inférieure.

15. Procédé selon l'une quelconque des revendications 10 à 14, comprenant en outre une étape de collage, pendant laquelle une bande de matériau d'emballage (4) en utilisation est collée avec une nouvelle bande de matériau d'emballage (4) ; la bande de matériau d'emballage (4) obtenue par le collage ayant une partie collée formée en conséquence du collage ;
dans lequel pendant l'étape de détermination, un affaissement de la partie de scellement longitudinal (18)est également déterminé en fonction de si, en utilisation, la partie de collage avance à l'intérieur du logement d'isolation (12) et/ou une section de la partie de scellement longitudinal (18) provenant de la partie de collage avance à l'intérieur du logement d'isolation (12).
